(19) **Europäisches Patentamt / European Patent Office / Office européen des brevets**

(11) **EP 2 357 697 A1**

(12) **EUROPEAN PATENT APPLICATION**
published in accordance with Art. 153(4) EPC

(43) Date of publication:
**17.08.2011 Bulletin 2011/33**

(21) Application number: **09826043.3**

(22) Date of filing: **04.11.2009**

(51) Int Cl.:
**H01M 8/02** (2006.01)    **H01M 8/10** (2006.01)

(86) International application number:
**PCT/JP2009/068801**

(87) International publication number:
**WO 2010/055793 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.11.2008 JP 2008288939**

(71) Applicant: **Sharp Kabushiki Kaisha**
**Osaka-shi, Osaka 545-8522 (JP)**

(72) Inventors:
• **YOSHIE, Tomohisa**
  **Osaka-shi,**
  **Osaka**
  **545-8522 (JP)**

• **YOSHIDA, Akihito**
  **Osaka-shi,**
  **Osaka**
  **545-8522 (JP)**
• **SATA, Shunsuke**
  **Osaka-shi,**
  **Osaka**
  **545-8522 (JP)**
• **KAGA, Masaki**
  **Osaka-shi,**
  **Osaka**
  **545-8522 (JP)**

(74) Representative: **Treeby, Philip David William et al**
**R.G.C. Jenkins & Co**
**26 Caxton Street**
**London SW1H 0RJ (GB)**

(54) **MEMBRANE ELECTRODE ASSEMBLY**

(57)    There is provided a membrane electrode assembly comprising an electrolyte membrane (101), an anode electrode (102) stacked on one surface of the electrolyte membrane (101), a cathode electrode (103) stacked on the other surface of the electrolyte membrane (101), and a channel plate (104) arranged on a side of the anode electrode (102), said side being the reverse side of the electrolyte membrane (101) side. The membrane electrode assembly also comprises an insulating sealing layer (105) which covers at least the lateral surfaces of the anode electrode (102), the electrolyte membrane (101) and the channel plate (104), and contains a water-swellable particle (105a).

FIG.1

EP 2 357 697 A1

EP 2 357 697 A1

**Description**

TECHNICAL FIELD

The present invention relates to a membrane electrode assembly capable of effectively suppressing outward fuel leakage.

BACKGROUND ART

Practicalization of a fuel cell as a novel power source for a portable electronic apparatus supporting the information-oriented society is increasingly expected due to the point of such long-time driving that the user can utilize the electronic apparatus longer than ever by refueling the same once and the point of such convenience that the user can immediately utilize the electronic apparatus by purchasing fuel and replenishing the same without waiting for charging of the cell even if he/she uses up the cell while being out.

The fuel cell generally supplies power to the electronic apparatus by utilizing oxidation-reduction reaction oxidizing fuel such as hydrocarbon-based gas, hydrogen gas or aqueous alcohol in an anode electrode and reducing oxygen in the air in a cathode electrode.

Fuel cells are classified into a phosphoric acid type, a fused carbonate type, a solid electrolyte type, a solid polymer type, a direct alcohol type and the like, in response to classifications of used electrolyte materials or fuel. Particularly as to a solid polymer type fuel cell and a direct alcohol type fuel cell employing ion exchange membranes which are solid polymers for electrolyte materials, practicalization as miniature fuel cells aimed at application to portable electronic apparatuses is discussed since electrolyte membranes are thin membranes of not more than submillimeters and high power generation efficiency is attained at ordinary temperature.

When aqueous alcohol is supplied to an anode electrode of a direct alcohol type fuel cell using a cation exchange membrane as an electrolyte membrane, the aqueous alcohol coming into contact with the anode electrode is oxidized and separated into gas such as carbon dioxide and protons.

In a case of employing methanol as alcohol, for example, carbon dioxide is formed on the anode electrode side, due to the following oxidation reaction:

$$CH_3OH + H_2O \rightarrow CO_2 \uparrow + 6H^+ + 6e^-$$

Protons formed on the anode electrode side are transmitted to a cathode electrode side through the electrolyte membrane. The protons and oxygen in the air are supplied to the cathode electrode, and water is formed due to the following reduction reaction:

$$3/2O_2 + 6H^+ + 6e^- \rightarrow 3 H_2O$$

At this time, electrons pass through an external electronic apparatus (load) and move from the anode electrode to the cathode electrode, so that electric power is extracted.

An assembly, serving as a central member for extracting such electric power, formed by bonding the anode electrode, the electrolyte membrane and the cathode electrode to each other is referred to as a membrane electrode assembly.

A membrane electrode assembly employed for a direct alcohol type fuel cell or the like must be provided with a proper means for inhibiting and preventing fuel supplied to the membrane electrode assembly from leaking out of the assembly. For example, Japanese Patent Laying-Open No. 2002-151109 (Patent Document 1) discloses a fuel cell prepared by holding and fixing a joined body (membrane electrode assembly) obtained by arranging a pair of electrodes on both sides of an electrolyte membrane by a pair of separators including gas passages supplied with fuel gas and oxidizing gas respectively, arranging a sealant between outer peripheral edge portions of the pair of separators, and providing swelling members swelling by absorbing moisture and contact pressure transmission members pressing the sealant by swelling of these swelling members between the sealant and the separators.

In the aforementioned fuel cell, however, the sealant is provided between the electrolyte membrane and the separators, and hence the electrolyte membrane must be formed to be larger than the electrodes arranged on both sides thereof, i.e., regions not provided with the electrodes must be provided on the outer peripheral portion of the electrolyte membrane (refer to Fig. 1 etc. of Patent Document 1). Such outer peripheral portions of the electrolyte membrane, i.e., the electrolyte membrane portions not provided with the electrodes (an anode electrode and a cathode electrode) cannot contribute to oxidation-reduction reaction even if the same are supplied with the fuel and the oxidizing gas, and hence such problems remarkably arise that the area of the outer peripheral portion of the electrolyte membrane with respect to the total area of the membrane electrode assembly relatively enlarges, the areas of the electrodes cannot

2

be set to be large with respect to the set area of the fuel cell and necessary power cannot be supplied in a portable electronic apparatus consuming power of several watts, particularly in a fuel cell to be loaded on a portable electronic apparatus.

Japanese Patent Laying-Open No. 2001-93548 (Patent Document 2) describes, as means for preventing leakage of fuel or the like, a technique of forming a sealing portion by applying and infiltrating a sealing agent made of polyisobutylene-based resin or the like to and into an electrode forming member in a latticelike manner and thereafter obtaining an electrode by cutting the electrode forming member from above the sealing portion and a technique of forming sealing portions made of polyisobutylene-based resin or the like on the overall side surfaces of a membrane electrode assembly.

PRIOR ART DOCUMENTS

PATENT DOCUMENTS

Patent Document 1: Japanese Patent Laying-Open No. 2002-151109
Patent Document 2: Japanese Patent Laying-Open No. 2001-93548

SUMMARY OF THE INVENTION

PROBLEMS TO BE SOLVED BY THE INVENTION

If sealing layers (sealing portions) are merely formed on the side surfaces of a membrane electrode assembly as in the prior art, the surfaces of the sealing layers are exposed to external environmental change such as temperature change or humidity change due to long-term continuation of power generation, and hence interfaces between respective members may be locally separated or leakage holes (pinholes) may be partially formed in the sealing layers to gradually increase fuel leakage, even if no fuel leakage takes place immediately after manufacturing or immediately after power generation.

The present invention has been proposed in order to solve the aforementioned problems, and an object thereof is to provide a membrane electrode assembly capable of effectively suppressing outward fuel leakage even if the same continues power generation over a long period of time in a membrane electrode assembly aimed at application to a portable electronic apparatus consuming power of several watts, particularly at application to a fuel cell loaded on a portable electronic apparatus.

Another object of the present invention is to provide a membrane electrode assembly capable of effectively suppressing outward fuel leakage and so designable that the areas of electrodes (an anode electrode and a cathode electrode) can be large with respect to a limited set area of a fuel cell and capable of sufficiently supplying desired power even if the same continues power generation over a long period of time in a membrane electrode assembly aimed at application to a portable electronic apparatus consuming power of several watts, particularly at application to a fuel cell loaded on a portable electronic apparatus.

MEANS FOR SOLVING THE PROBLEMS

The present invention provides a membrane electrode assembly including an electrolyte membrane, an anode electrode stacked on one surface of the electrolyte membrane, a cathode electrode stacked on the other surface of the electrolyte membrane, and a channel plate arranged on a side of the anode electrode, said side being the reverse side of the electrolyte membrane side, and further including an insulating sealing layer, containing a water-swellable particle and covering the side surfaces of at least the anode electrode, the electrolyte membrane and the channel plate. The aforementioned side surfaces of at least the anode electrode, the electrolyte membrane and the channel plate, which are the side surfaces covered with the insulating sealing layer, preferably form one continuous surface.

In the present invention, the water-swellable particle is preferably made of a water-absorbent polymer, and a swelling rate of the water-swellable particle in water immersion is preferably 150 % to 400 %. Polyacrylic acid or polyvinyl alcohol can be preferably employed as the water-absorbent polymer.

The average particle diameter of the water-swellable particle is preferably 10 to 500 $\mu$m, and the thickness of the insulating sealing layer is preferably at least 10 times as large as the average particle diameter of the water-swellable particle. A swelling rate of a base material constituting the insulating sealing layer in water immersion is preferably not more than 10 %.

EFFECTS OF THE INVENTION

The insulating sealing layer, provided on the side surfaces of at least the anode electrode, the electrolyte membrane and the channel plate, included in the membrane electrode assembly according to the present invention has a function of self-repairing fuel leakage portions. According to the inventive membrane electrode assembly including such an insulating sealing layer, fuel leakage can be effectively suppressed even if interfaces between the members constituting the membrane electrode assembly are locally separated or a leakage hole (pinhole) is partially formed in the insulating sealing layer due to long-term power generation.

Further, the membrane electrode assembly so includes the insulating sealing layer having the aforementioned self-repairing function that regions provided with no electrodes may not necessarily be provided on the outer peripheral portion of the electrolyte membrane, whereby the areas of the anode electrode and the cathode electrode can be designed as large as possible and power of several watts necessary for power consumption can be supplied even if the membrane electrode assembly is loaded on a portable electronic apparatus allowed to have only a limited loading area.

BRIEF DESCRIPTION OF THE DRAWINGS

Fig. 1 is a sectional view schematically showing a preferred example of a membrane electrode assembly according to the present invention.

Fig. 2 is a schematic sectional view showing an insulating sealing layer of the membrane electrode assembly shown in Fig. 1 in an enlarged manner, and showing a state of a leakage hole formed in the insulating sealing layer before causing fuel leakage.

Fig. 3 is a schematic sectional view showing the insulating sealing layer of the membrane electrode assembly shown in Fig. 1 in an enlarged manner, and showing such a state that water-swellable particles in the vicinity of the leakage hole formed in the insulating sealing layer swell as a result of causing fuel leakage.

Fig. 4 is a schematic sectional view showing the insulating sealing layer of the membrane electrode assembly shown in Fig. 1 in an enlarged manner, and showing such a state that water-swellable particles in the vicinity of another leakage hole formed in the insulating sealing layer swell as a result of causing fuel leakage.

MODES FOR CARRYING OUT THE INVENTION

<First Embodiment>

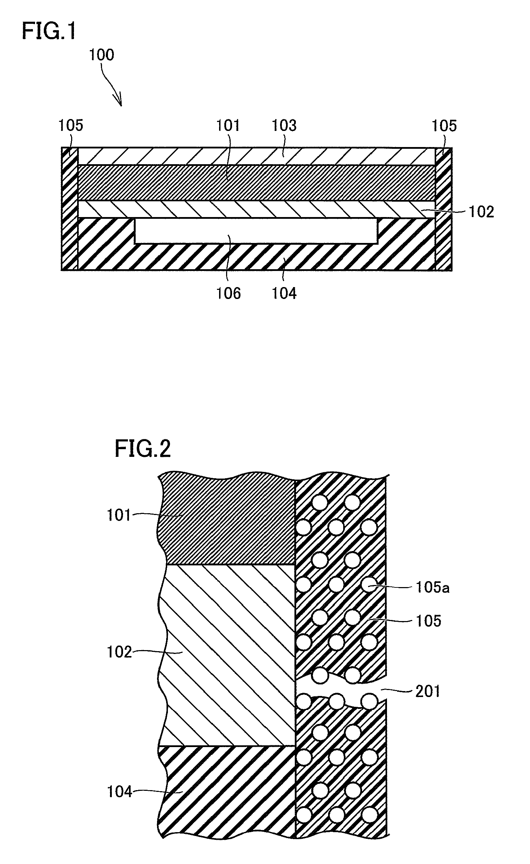

Fig. 1 is a sectional view schematically showing a preferred example of the membrane electrode assembly according to the present invention. A membrane electrode assembly 100 shown in Fig. 1 includes an electrolyte membrane 101, an anode electrode 102 stacked on one surface of electrolyte membrane 101, a cathode electrode 103 stacked on the other surface of electrolyte membrane 101, a channel plate 104, having a recess (groove) 106 constituting a fuel channel formed on one surface, stacked on a side of anode electrode 102 opposite to the side of electrolyte membrane 101, and insulating sealing layers 105 covering two opposed side surfaces of membrane electrode assembly 100. More specifically, the side surfaces of membrane electrode assembly 100 provided with insulating sealing layers 105 consist of continuous surfaces constituted of end surfaces (side surfaces) of cathode electrode 103, end surfaces of electrolyte membrane 101, end surfaces of anode electrode 102 and end surfaces of channel plate 104, and insulating sealing layers 105 are formed to cover the overall side surfaces consisting of these continuous surfaces. The fuel channel is constituted of a surface of anode electrode 102 closer to channel plate 104 and recess 106 included in channel plate 104 adjacent to anode electrode 102. In the present invention, water-swellable particles swelling by water are dispersed into insulating sealing layers 105.

Thus, the insulating sealing layers containing the water-swellable particles dispersed thereinto are so formed on the side surfaces of at least the electrolyte membrane, the anode electrode and the channel plate that fuel leakage can be effectively suppressed or prevented and mixing of fuel and air supplied to the membrane electrode assembly can be suppressed or prevented even if interfaces between the members constituting the membrane electrode assembly are locally separated or leakage holes (pinholes) are partially formed in the insulating sealing layers due to power generation over a long time, since the insulating sealing layers exhibit functions of self-repairing fuel leakage portions.

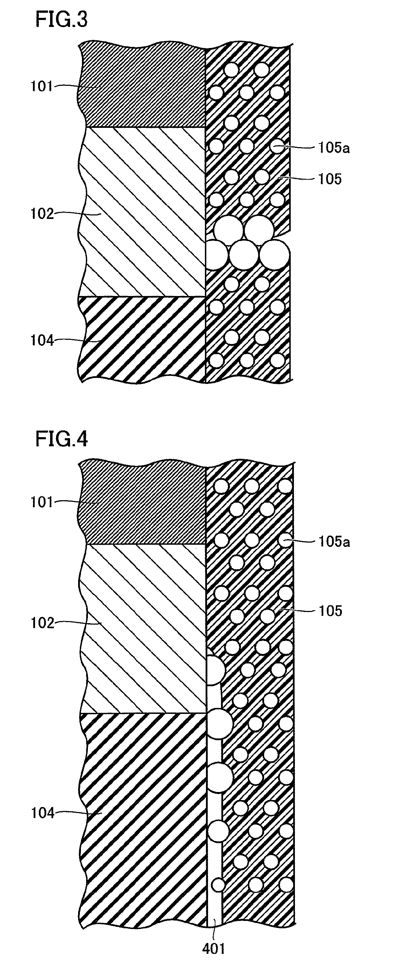

Fig. 2 is a schematic sectional view showing insulating sealing layer 105 of membrane electrode assembly 100 shown in Fig. 1 in an enlarged manner, and showing a state of a leakage hole 201 formed in insulating sealing layer 105 before causing fuel leakage. Fig. 3 is a schematic sectional view showing insulating sealing layer 105 of membrane electrode assembly 100 shown in Fig. 1 in an enlarged manner, and showing such a state that water-swellable particles 15a in the vicinity of leakage hole 201 formed in insulating sealing layer 105 swell as a result of causing fuel leakage.

As hereinabove described, water-swellable particles 105a swelling by water are dispersed into insulating sealing layer 105 in the membrane electrode assembly according to the present invention. As shown in Fig. 2, leakage hole 201 can be unpredictably formed in insulating sealing layer 105, due to external environmental change such as temperature change or humidity change following power generation. Fig. 2 shows such a state that the leakage hole is formed in a portion of the insulating sealing layer covering the side surface of anode electrode 102. In the case where the leakage hole is formed in the insulating sealing layer, it follows that the water-swellable particles dispersed into the insulating sealing layer are exposed on the surface of the inner wall of the leakage hole in the membrane electrode assembly according to the present invention, even if the leakage hole is formed in an unspecific portion of the insulating sealing layer (see Fig. 2).

When fuel (aqueous methanol or the like, for example) leaks into leakage hole 201 in the state shown in Fig. 2, water-swellable particles 105a come into contact with and absorb the fuel to swell in volume thereby blocking leakage hole 201, whereby fuel leakage can be suppressed in a self-repairing manner also in a case where the leakage portion cannot be previously specified (see Fig. 3).

Similarly, Fig. 4 is a schematic sectional view showing insulating sealing layer 105 of membrane electrode assembly 100 shown in Fig. 1 in an enlarged manner, and showing such a state that water-swellable particles 105a in the vicinity of another leakage hole 401 formed in insulating sealing layer 105 swell as a result of causing fuel leakage. Fig. 4 shows such a state that separation partially takes place between anode electrode 102 and channel plate 104, and insulating sealing layer 105 due to the formation of leakage hole 401. Also in such a state, water-swellable particles 105a swell due to the fuel leaking into leakage hole 401 so that fuel leakage can be suppressed in a self-repairing manner according to the present invention.

In such a state that the fuel does not leak despite the formation of the leakage hole as in the state shown in Fig. 2, the leakage hole, not blocked by the water-swellable particles, can function as an exhaust for exhaust gas such as carbon dioxide formed in the anode electrode. Thus, insufficiency of fuel caused since the ratio of the volume of the exhaust gas (carbon dioxide) with respect to the volume of the fuel enlarges on a downstream side of the fuel channel can be suppressed, and uniform power generation can be performed over an entire fuel cell.

Further, the insulating sealing layers containing the water-swellable particles dispersed thereinto are so formed on the side surfaces of at least the electrolyte membrane, the anode electrode and the channel plate that an electrical short circuit between the anode electrode and the cathode electrode can be stably prevented without employing the outer peripheral portion of the electrolyte membrane as a diaphragm (in other words, without providing regions not provided with the anode electrode and the a cathode electrode on the outer peripheral portion of the electrolyte membrane). Therefore, regions provided with no electrodes may not necessarily be provided on the outer peripheral portion of the electrolyte membrane. Thus, also in a case of loading the membrane electrode assembly on a portable electronic apparatus allowed to have only a limited loading area, the areas of the anode electrode and the cathode electrode can be designed as large as possible, and power of several watts necessary for power consumption can be supplied.

In the side surfaces of the membrane electrode assembly according to the present invention, the side surfaces (side surfaces constituted of at least the end surfaces of the electrolyte membrane, the end surfaces of the anode electrode and the end surfaces of the channel plate) provided with the insulating sealing layers are preferably continuous surfaces having no protrusions or the like. Thus, the insulating sealing layers arranged to cover the side surfaces can be formed with uniform thicknesses, whereby local stress concentration on the side surfaces resulting from swelling or contraction of the insulating sealing layers caused by change in the external environment hardly take place, and adhesive strength of the insulating sealing layers with respect to the side surfaces can be improved. In the present invention, however, the side surfaces provided with the insulating sealing layers may be noncontinuous surfaces, as in a case of providing regions not provided with the anode electrode and the cathode electrode on the outer peripheral portion of the electrolyte membrane, for example.

While the side surfaces provided with the insulating sealing layers may be the side surfaces constituted of at least the end surfaces of the electrolyte membrane, the end surfaces of the anode electrode and the end surfaces of the channel plate in the side surfaces of the membrane electrode assembly according to the present invention, the end surfaces of the cathode electrode are preferably also covered with the insulating sealing layers as shown in Fig. 1, in view of simplifying a process of forming the insulating sealing layers and reducing the manufacturing cost. In other words, such an assembly (second assembly) that the side surfaces of the anode electrode, the electrolyte membrane and the cathode electrode form single continuous surfaces can be efficiently manufactured by cutting a first assembly having a multilayer structure of the anode electrode, the electrolyte membrane and the cathode electrode, as described later.

If cations such as iron ions, calcium ions etc. or anions such as chloride ions, fluorine ions etc. come into contact with the surface of the electrolyte membrane, ion exchange takes place with protons (hydrogen ions) and oxonium ions contained in the electrolyte membrane, so that the cations or the anions are incorporated into the electrolyte membrane. It is generally known that metallic ions and chloride ions have low mobility as compared with protons and oxonium ions, and the function (proton conductivity) of the electrolyte membrane conducting protons lowers due to contamination with these impurity ions, and hence the internal resistance of the membrane electrode assembly rises while the output lowers.

In the present invention, the outer peripheral portion (regions not provided with the anode electrode and the cathode electrode) is not necessarily required and exposed areas of the side surfaces of the electrolyte membrane decrease due to the insulating sealing layers, whereby contamination of the electrolyte membrane with impurity ions is suppressed, and long-term reliability of the output of the membrane electrode assembly can be obtained.

Typical modes of the respective members constituting the membrane electrode assembly according to the present invention are now described.

(Insulating Sealing Layer)

The insulating sealing layer in the membrane electrode assembly according to the present invention is formed by a layer, provided with insulation properties, having functions of suppressing or preventing mixing of fuel and air as well as fuel leakage, maintaining electrical insulation between the anode electrode and the cathode electrode and preventing a short circuit. While a method of forming the insulating sealing layers on the side surfaces constituted of at least the end surfaces of the electrolyte membrane, the end surfaces of the anode electrode and the end surfaces of the channel plate is not particularly restricted, a method of applying a precursor liquid for the insulating sealing layer to the side surfaces and drying or hardening the same as necessary can be preferably employed. The thicknesses of the insulating sealing layers can be controlled on the order of submillimeters by forming the insulating sealing layers by application of the precursor liquid. Therefore, the surface area of the membrane electrode assembly can be further reduced while controlling the insulating sealing layers with thicknesses of not more than 1 mm and preventing leakage of the fuel.

As the precursor liquid for the insulating sealing layer, a composition (solution, for example) containing a base material (a polymer material or monomer resin curable by photosensitization or addition of a polymerization initiator, for example) constituting the insulating sealing layer and the water-swellable particles can be employed, for example.

While a method of dispersing the water-swellable particles into the precursor liquid is not particularly restricted, dispersion with an ultrasonic probe is preferable. The ultrasonic probe is so employed that the water-swellable particles can be sufficiently homogeneously dispersed up to primary particles, and in a case where leakage holes are formed in the insulating sealing layers, the water-swellable particles can be rendered sufficiently present in the leakage holes.

The aforementioned base material is not particularly restricted so far as the same is a material having excellent bondability to the electrolyte membrane and the channel plate, and an organic polymer or an inorganic polymer can be employed. Epoxy-based resin, acrylic-based resin, polyisobutylene-based resin, fluorine-based resin or the like can be employed as the organic polymer, for example, and silicone resin or the like can be employed as the inorganic polymer. In particular, the epoxy-based resin or the acrylic-based resin is preferable in a point that the same can sufficiently fix the water-swellable particles, and the epoxy-based resin having a small swelling rate with respect to water is more preferable.

In order to suppress formation of leakage holes by reducing stress applied to the interfaces between the insulating sealing layers and the electrolyte membrane and the channel plate, a swelling rate in water immersion of the base material constituting the insulating sealing layers is preferably not more than 20 %. In particular, a base material having a swelling rate of not more than 10 % in water immersion is so employed that the insulating sealing layers hardly cause volume change and only the water-swellable particles cause volume increase when fuel leakage takes place from leakage holes, whereby the leakage holes can be effectively blocked. In the present invention, the swelling rate in water immersion of the base material constituting the insulating sealing layer is expressed by the following formula (1):

$$\text{Swelling rate of base material} = (V_1 - V_0)/V_0 \times 100 \ (\%) \qquad (1)$$

$V_0$ represents the volume of the base material (solid state) in a dry state, and $V_1$ represents the volume of the base material after the base material in the dry state is completely immersed in pure water at 40°C and 24 hours elapse. The volumes of the base material before and after water immersion are measured from lengths, widths and thicknesses before and after water immersion by employing a platelike base material as an evaluation sample.

The aforementioned precursor liquid for the insulating sealing layer preferably contains an organic solvent dissolving or softening the electrolyte membrane. In a case of employing a perfluorosulfonic acid-based polymer described later as the electrolyte membrane, an alcoholic solvent such as methanol, ethanol or the like is so employed that the electrolyte membrane can be softened and bonding area with respect to the insulating sealing layer increase due to the softened electrolyte membrane, whereby the electrolyte membrane and the insulating sealing layer can be strongly bonded to each other. In a case of employing a hydrocarbon-based polymer described later as the electrolyte membrane, on the other hand, an organic solvent such as dimethylacetamide, tetrahydrofuran or the like having higher dissolving capacity than the alcoholic solvent is so employed that the electrolyte membrane and the insulating sealing layer can be strongly bonded to each other by temporarily dissolving the electrolyte membrane and rehardening the same along with the formation of the insulating sealing layer.

The water-swellable particles dispersed into the insulating sealing layer are particles swelling in volume by absorbing water such as moisture contained in the fuel (aqueous methanol or the like, for example), as hereinabove described. While the material constituting the water-swellable particles is not particularly restricted so far as the same exhibits a water-swelling property, a water-absorbent polymer can be preferably employed in a case of employing the aforementioned organic or inorganic polymer as the base material constituting the insulating sealing layer, since bondability to the base material is excellent. As the water-absorbent polymer, a polymer having a hydrophilic functional group such as polyacrylic acid, sodium polyacrylate, polyvinyl alcohol, acetyl cellulose, carboxymethyl cellulose, saponified polymer of vinyl acetate-methyl acrylate copolymer or the like can be employed, for example.

A hydroxyl group, a carboxyl group, an amino group or the like is preferable as the aforementioned hydrophilic functional group, and a hydroxyl group, a carboxyl group, an amino group or the like not forming metallic salt is more preferable. While such a polymer that protons on a terminal of a functional group are exchanged with metallic ions such as sodium ions, potassium ions, calcium ions or the like to form metallic salt is also generally known as the water-absorbent polymer, a water-absorbent polymer containing no metal is more preferably employed in the present invention, since it is possible to inhibit metallic ions from ion-exchanging with protons in the electrolyte membrane through leaking fuel. From such a point of view, polyacrylic acid, polyvinyl alcohol or the like is more preferably employed as the water-absorbent polymer.

In order that the water-swellable particles remarkably swell in volume to sufficiently block the leakage holes, the swelling rate of the water-swellable particle in water immersion is preferably at least 150 %, and more preferably at least 250 %. On the other hand, the swelling rate of the water-swellable particle in water immersion is preferably not more than 400 %, and more preferably not more than 300 %. If the swelling rate of the water-swellable particle is larger than 400 %, shapes of the water-swellable particles when containing water cannot be sufficiently maintained, and even if temporarily blocking the leakage holes, the water-swellable particles may so deform due to internal pressure rise in the channel by carbon dioxide caused in the anode electrode that the same cannot properly prevent fuel leakage. In the present invention, the swelling rate of the water-swellable particle in water immersion is expressed by the following formula (2):

$$\text{Swelling rate of water-swellable particle} = (V_3 - V_2)/V_2 \times 100 \ (\%) \ \ (2)$$

$V_2$ represents the volume of the water-swellable particle in a dry state, and $V_3$ represents the volume of the water-swellable particle after the water-swellable particle in the dry state are completely immersed in pure water at 40°C and 24 hours elapse. The volumes of the water-swellable particle before and after water immersion are volumes calculated when regarding the average particle diameter of the water-swellable particle described below as the "diameter" of the particle and assuming that the particle are spherical.

The material constituting the water-swellable particle is preferably a material (non-water-soluble material) not dissolved or hardly dissolved in water. In a case of preparing the water-swellable particle from a water-soluble polymer material, the same can be rendered non-water-soluble by crosslinking part of the water-soluble polymer and increasing the molecular weight.

The average particle diameter of the water-swellable particle is preferably 10 to 500 $\mu$m, and more preferably 20 to 200 $\mu$m. The average particle diameter is so set to not more than 500 $\mu$m that the particle can be homogeneously dispersed into the precursor liquid for the insulating sealing layer, whereby the water-swellable particles can be rendered homogeneously present also in the formed insulating sealing layer, and even if leakage holes are formed in unspecific portions of the insulating sealing layer, the water-swellable particle can be rendered necessarily present on inner wall surfaces of the leakage holes. Therefore, fuel leakage can be efficiently suppressed. Further, the diameters of the leakage holes unspecifically formed in the insulating sealing layer in the present invention are generally around several $\mu$m, and hence the water-swellable particles can sufficiently block the leakage holes by swelling in the case where the average particle diameter is at least 10 $\mu$m. In the present invention, the average particle diameter of the water-swellable particle is obtained by obtaining an enlarged image with an optical or electron microscope, calculating the particle diameters of randomly extracted 100 particles and averaging these.

With respect to the average particle diameter of the water-swellable particle, the thickness of the insulating sealing layer is preferably at least 10 times, and more preferably at least 20 times. Thus, at least several water-swellable particles can be rendered present in each leakage hole in relation to the thickness direction of the insulating sealing layer, and fuel leakage can be sufficiently suppressed.

(Electrolyte Membrane)

The electrolyte membrane in the membrane electrode assembly according to the present invention has a function of transmitting protons from the anode electrode to the cathode electrode and a function of preventing a short circuit by maintaining electrical insulation between the anode electrode and the cathode electrode. The material for the electrolyte membrane is not particularly restricted so far as the same is a material having proton conductivity and having electrical insulation properties, and a polymer membrane, an inorganic membrane or a composite membrane can be employed. As the polymer membrane, Nafion (registered trademark, by E.I, du Pont de Nemours and Company), Aciplex (registered trademark, by Asahi Kasei Corporation) or Flemion (registered trademark, by Asahi Glass Co., Ltd.), which is a perfluorosulfonic acid-based electrolyte membrane, can be listed, for example. A hydrocarbon-based electrolyte membrane consisting of a styrene-based graft polymer, a trifluorostyrene derivative copolymer, sulfonated polyarylene ether, sulfonated polyether ether ketone, sulfonated polyimide, sulfonated polybenzoimidazole, phosphonated polybenzoimidazole, sulfonated

polyphosphazene or the like can also be listed.

As the inorganic membrane, a membrane consisting of phosphate glass, cesium bisulfate, polytungstophosphate, ammonium polyphosphate or the like can be listed, for example. As the composite membrane, a composite membrane consisting of inorganic material such as tungstic acid, cesium bisulfate, polytungstophosphate or the like and organic material such as polyimide, polyether ether ketone, perfluorosulfonic acid or the like can be listed.

(Anode Electrode and Cathode Electrode)

The anode electrode and the cathode electrode in the membrane electrode assembly according to the present invention are provided with a catalyst layer consisting of a porous layer having at least a catalyst and an electrolyte. The catalyst for the anode electrode decomposes fuel such as aqueous methanol, hydrogen gas or the like into protons and electrons, while the electrolyte has a function of transmitting the formed protons to the electrolyte membrane. The catalyst for the cathode electrode has a function of forming water from the protons transmitted through the electrolyte and oxygen in the air.

The catalysts for the anode electrode and the cathode electrode may be supported on the surfaces of conductors such as carbon, titanium or the like. In this case, the catalysts and the conductors are preferably on the order of submicrons, and the electrolytes for the anode electrode and the cathode electrode are preferably organic polymer materials. This is because the catalyst layers can be treated substantially as homogeneous layers with respect to cutting teeth in a manufacturing process of obtaining a second assembly of the anode electrode, the electrolyte membrane and the cathode electrode which are the members constituting the membrane electrode assembly by cutting a first assembly, described later, including the anode electrode, the electrolyte membrane and the cathode electrode when the catalysts and the conductors constituting the catalyst layers are on the order of submicrons, so that the membrane electrode assembly can be obtained without causing an electrical short circuit between the electrodes even if the anode electrode and the cathode electrode are cut.

(Channel Plate)

The channel plate in the membrane electrode assembly according to the present invention has a function of supplying fuel to the anode electrode. As the material for the channel plate, a polymer material (plastic material) such as acrylic resin; ABS; polyvinyl chloride; polyethylene; polyethylene terephthalate; polyether ether ketone; fluorine-based resin such as polytetrafluoroethylene or polyvinylidene fluoride or the like, or a metallic material such as copper, stainless, titanium or the like can be employed.

In particular, it is preferable to employ a metallic material as the material for the channel plate, and it is more preferable to employ an anti-corrosive metallic material such as stainless, titanium or the like. This is because the material for the channel plate is so prepared from metal that an effect of collecting electrons from the anode electrode is provided, and reduction of the output can be suppressed by reducing the internal resistance of the membrane electrode assembly. Further, the anti-corrosive metallic material is so employed that elution of metallic ions from the channel plate is suppressed and ion exchange to the electrolyte membrane and electrolytes contained in the anode electrode and the cathode electrode can be suppressed, whereby reduction of the internal resistance of the membrane electrode assembly can be similarly suppressed, and output reduction can be thereby suppressed. In a case of employing a plastic material such as acrylic resin, ABS, polyvinyl chloride, polyethylene, polyethylene terephthalate or the like for the channel plate, the precursor liquid for the insulating sealing layer preferably contains an organic solvent dissolving or softening the channel plate, selected from an ether or ester compound such as diethyl ether, ethyl acetate or the like, a ketone compound such as acetone, methyl ethyl ketone or the like, or an aromatic compound such as toluene, benzene or the like. Such an organic solvent is so employed that the channel plate and the insulating sealing layer can be strongly bonded to each other by temporarily dissolving the channel plate and rehardening the same along with the formation of the insulating sealing layer.

While a manufacturing method for the membrane electrode assembly according to the present invention is not particularly restricted, a manufacturing method including the following steps (A) to (C) can be preferably applied as an efficient method of manufacturing the membrane electrode assembly whose side surfaces consist of continuous surfaces constituted of the end surfaces (side surfaces) of the respective constitutional members:

(A) a step of preparing the second assembly smaller in area than the first assembly by cutting the anode electrode, the electrolyte membrane and the cathode electrode of the first assembly having the multilayer structure of the anode electrode, the electrolyte membrane and the cathode electrode,
(B) a step of arranging the channel plate on the anode electrode side of the aforementioned second assembly, and
(C) a step of forming the insulating sealing layers by applying the precursor liquid for the insulating sealing layers on the cut surfaces of the second assembly and the side surfaces of the channel plate.

The side surfaces consisting of the continuous surfaces constituted of the end surfaces of the anode electrode, the end surfaces of the electrolyte membrane and the end surfaces of the cathode electrode can be easily formed by cutting the first assembly thereby preparing the assembly (second assembly) consisting of the anode electrode, the electrolyte membrane and the cathode electrode. The first assembly having a sufficiently large size is manufactured and thereafter cut into the second assembly of a desired size, whereby no manufacturing lines for membrane electrode assemblies having different sizes may be provided in order to load the same on portable electronic apparatuses varied in power consumption. Therefore, manufacturing of the complicated anode electrode and the cathode electrode and the manufacturing line for the assemblies can be unified, and the manufacturing cost can be remarkably reduced.

While the size of the channel plate stacked on the aforementioned second assembly is not particularly restricted, the same is preferably rendered substantially identical to the size of the second assembly, so that the side surfaces, constituted of the side surfaces (cut surfaces) of the second assembly and the side surfaces of the channel plate, of the membrane electrode assembly provided with the insulating sealing layers are continuous surfaces. The second assembly and the channel plate are bonded to each other by arranging the channel plate on the second assembly (step (B)) and forming the insulating sealing layers on the side surfaces of the obtained multilayer body.

EXAMPLE

While the present invention is now described in more detail with reference to Example, the present invention is not restricted to this. The swelling rates of a base material constituting the insulating sealing layer and the water-swellable particle were measured by the aforementioned method.

<Example 1>

Nafion (registered trademark) 117 (by E.I. du Pont de Nemours and Company) of 40 by 40 mm in size and about 175 $\mu$m in thickness was employed as an electrolyte membrane.

Catalyst pastes were prepared through the following procedures: A catalyst paste for an anode electrode was prepared by introducing catalyst-supporting carbon particles (TEC66E50, by Tanaka Kikinzoku Kogyo K.K.), consisting ofPt particles, Ru particles and carbon particles, having a Pt content of 32.5 wt.% and an Ru content of 16.9 wt.%, 20wt. % of alcohol solution of Nafion (by Sigma-Aldrich Corporation), n-propanol, isopropanol and zirconia balls into a vessel of a fluorine-based polymer at prescribed ratios and mixing for 50 minutes with a stirrer at 500 rpm. On the other hand, a catalyst paste for a cathode electrode was prepared similarly to the catalyst paste for the anode electrode, by employing catalyst-supporting carbon particles (TEC10E50E, by Tanaka Kikinzoku Kogyo K.K.), consisting of Pt particles and carbon particles, having a Pt content of 46.8 wt.%.

An anode electrode having a thickness of about 300 $\mu$m was formed by applying the aforementioned catalyst paste for the anode electrode onto a water-repellent layer of carbon paper (25BC, by SGL Carbon Japan Co., Ltd., 23 mm by 23 mm) having the water-repellent layer formed on one surface with a screen printing plate having a window of 23 by 23 mm so that the catalyst support quantity was about 3 mg/cm$^2$ and drying the same. Further, a cathode electrode having a thickness of about 300 $\mu$m was formed similarly to the anode electrode, except that the catalyst paste for the cathode electrode was applied so that the catalyst support quantity was about 1 mg/cm$^2$.

Then, a first assembly consisting of a multilayer body of the anode electrode, the electrolyte membrane and the cathode electrode was prepared by superposing the anode electrode, the electrolyte membrane and the cathode electrode in this order and performing hot pressing for two minutes at 130°C. The anode electrode and the cathode electrode were so superposed that surfaces thereof coated with the catalyst pastes were in contact with the electrolyte membrane and both of the anode electrode and the cathode electrode were located at the center of the electrolyte membrane.

Then, a plurality of second assemblies of 2 mm in width and 40 mm in length were obtained by performing cutting parallelly to two opposed sides of the aforementioned first assembly and vertically to the surface of the first assembly at intervals of 2 mm with a cutting edge of stainless while pressing the surface of the membrane electrode assembly other than cut portions with an acrylic plate.

Then, a precursor liquid for insulating sealing layer was prepared by mixing 0.5 g of polyacrylic acid particles of 30 $\mu$m in average particle diameter whose swelling rate in water immersion was about 300 % into epoxy resin whose swelling rate in water immersion was about 5 % and dispersing the same for 10 minutes with an ultrasonic probe.

Then, a membrane electrode assembly was obtained by stacking the aforementioned second assembly on a channel plate of 2.0 mm in width and 27 mm in length including a fuel channel consisting of a groove of 0.2 mm in depth and 1.0 mm in width and extending substantially parallelly to the longitudinal direction of the channel plate so that the anode electrode side of the second assembly was opposed to the channel plate, thereafter putting the obtained multilayer body into two acrylic plates and thereafter applying the aforementioned precursor liquid to two opposed side surfaces (side surfaces consisting of the channel plate, the anode electrode, the electrolyte membrane and the cathode electrode, which were side surfaces including the cut surfaces of the second assembly) of the multilayer body thereby forming insulating sealing layers of about 500 $\mu$m in thickness.

A silicon tube was connected to one end of the fuel channel of the obtained membrane electrode assembly, and 3 mol/L of aqueous methanol was supplied with a feed pump at a flow rate of 1 ml/min. At this time, no fuel leakage from regions where the channel plate and the second assembly were bonded by the insulating sealing layers was recognized. When power generation for one hour per day was repeated with a load current of 100 mA/ cm$^2$, no particular fuel leakage was recognized even if the power generation was repeated for 10 days.

When the surfaces of the insulating sealing layers were moistened with cloth filled with soap water in the aforementioned power generation test, growth of bubbles was recognized. Thus, it has been proved that partial leakage holes formed in the insulating sealing layers functioned as exhausts for formed carbon dioxide.

<Comparative Example 1>

A membrane electrode assembly was prepared similarly to Example 1, except that epoxy resin containing no polyacrylic acid particles was employed as a precursor liquid for insulating sealing layers.

When 3 mol/L of aqueous methanol was supplied with a feed pump similarly to Example 1, no fuel leakage from regions where a channel plate and a second assembly were bonded by insulating sealing layers was recognized. When power generation for one hour per day was repeated with a load current of 100 mA/ cm$^2$, however, fuel leakage was recognized on the third day.

The embodiment and Example disclosed this time must be considered as illustrative in all points and not restrictive. The range of the present invention is shown not by the above description but by the scope of claims for patent, and it is intended that all modifications within the meaning and rage equivalent to the scope of claims for patent are included.

INDUSTRIAL APPLICABILITY

The membrane electrode assembly according to the present invention, so designable that the areas of the anode electrode and the cathode electrode are large with respect to a limited set area for the fuel cell and capable of preventing mixing of fuel and air as well as outward fuel leakage, can be preferably applied to a portable electronic apparatus.

DESCRIPTION OF THE REFERENCE SIGNS

100 membrane electrode assembly, 101 electrolyte membrane, 102 anode electrode, 103 cathode electrode, 104 channel plate, 105 insulating sealing layer, 105a water-swellable particle, 106 recess constituting fuel channel, 201, 401 leakage hole.

**Claims**

1. A membrane electrode assembly comprising:

    an electrolyte membrane (101);
    an anode electrode (102) stacked on one surface of said electrolyte membrane (101);

a cathode electrode (103) stacked on the other surface of said electrolyte membrane (101); and
a channel plate (104) arranged on a side of said anode electrode (102), said side being the reverse side of said electrolyte membrane (101) side, and
further comprising an insulating sealing layer (105), containing a water-swellable particle (105a) and covering the side surfaces of at least said anode electrode (102), said electrolyte membrane (101) and said channel plate (104).

2. The membrane electrode assembly according to claim 1, wherein
the side surfaces of said anode electrode (102), said electrolyte membrane (101) and said channel plate (104) form one continuous surface.

3. The membrane electrode assembly according to claim 1, wherein
said water-swellable particle (105a) is made of a water-absorbent polymer.

4. The membrane electrode assembly according to claim 1, wherein
a swelling rate of said water-swellable particle (105a) in water immersion is 150 % to 400 %.

5. The membrane electrode assembly according to claim 3, wherein
said water-absorbent polymer is polyacrylic acid or polyvinyl alcohol.

6. The membrane electrode assembly according to claim 1, wherein the average particle diameter of said water-swellable particle (105a) is 10 to 500 $\mu$m, and
the thickness of said insulating sealing layer (105) is at least 10 times as large as the average particle diameter of said water-swellable particle (105a).

7. The membrane electrode assembly according to claim 1, wherein
a swelling rate of a base material constituting said insulating sealing layer (105) in water immersion is not more than 10 %.

FIG.1

FIG.2

FIG.3

101

102

104

105a

105

FIG.4

101

102

104

105a

105

401

## INTERNATIONAL SEARCH REPORT

| | International application No. |
| --- | --- |
| | PCT/JP2009/068801 |

A. CLASSIFICATION OF SUBJECT MATTER
*H01M8/02*(2006.01)i, *H01M8/10*(2006.01)n

According to International Patent Classification (IPC) or to both national classification and IPC

B. FIELDS SEARCHED

Minimum documentation searched (classification system followed by classification symbols)
H01M8/02, H01M8/10

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-202535 A (Matsushita Electric Industrial Co., Ltd.), 03 August 2006 (03.08.2006), paragraphs [0009] to [0015], [0035] to [0036] (Family: none) | 1-7 |
| A | JP 2006-172960 A (Toyota Motor Corp.), 29 June 2006 (29.06.2006), paragraphs [0018] to [0026]; fig. 2, 3 (Family: none) | 1-7 |
| A | JP 2001-93548 A (Matsushita Electric Industrial Co., Ltd.), 06 April 2001 (06.04.2001), paragraphs [0012] to [0016]; fig. 3 (Family: none) | 1-7 |

[X] Further documents are listed in the continuation of Box C.    [ ] See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 November, 2009 (25.11.09) | 08 December, 2009 (08.12.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/068801 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-71780 A  (Toyota Motor Corp.),<br>17 March 2005 (17.03.2005),<br>paragraphs [0016] to [0018]<br>(Family: none) | 1-7 |
| A | JP 2007-179769 A  (Toyota Motor Corp.),<br>12 July 2007 (12.07.2007),<br>paragraphs [0044] to [0056]<br>(Family: none) | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002151109 A

- JP 2001093548 A